# EUROPEAN PATENT SPECIFICATION

(11) **EP 3 477 177 B1**
(45) Date of publication and mention of the grant of the patent: **31.01.2024**
(21) Application number: 17815101.5
(22) Date of filing: 26.05.2017
(51) Int. Cl.: F16L 11/08, B32B 1/08, B32B 25/18, C08K 3/04, C08K 3/34, C08L 23/22

(54) **RUBBER COMPOSITION FOR REFRIGERANT TRANSPORTING HOSES, AND REFRIGERANT TRANSPORTING HOSE**
KAUTSCHUKZUSAMMENSETZUNG FÜR KÄLTEMITTELTRANSPORTSCHLAUCH SOWIE KÄLTEMITTELTRANSPORTSCHLAUCH
COMPOSITION DE CAOUTCHOUC DESTINÉE À DES TUYAUX DE TRANSPORT DE RÉFRIGÉRANT, ET TUYAU DE TRANSPORT DE RÉFRIGÉRANT

(30) Priority: 22.06.2016 JP 2016123749
(43) Date of publication of application: 01.05.2019
(73) Proprietor: The Yokohama Rubber Co., Ltd., Kanagawa Prefecture, 254-8601 (JP)
(72) Inventor: SATO, Aya, Hiratsuka City Kanagawa 254-8601 (JP)
(74) Representative: Grünecker Patent- und Rechtsanwälte PartG mbB
(86) International application number: PCT/JP2017/019689
(87) International publication number: WO 2017/221632

(56) References cited:
- EP-A1- 3 406 665
- EP-A2- 1 148 283
- JP-A- 2003 056 761
- JP-A- 2003 278 958
- JP-A- 2013 228 081
- JP-A- 2016 074 811

## Description

### Technical Field

The present invention relates to a rubber composition for a refrigerant-transporting hose and a refrigerant-transporting hose.

### Background Art

A hose including a resin layer is often used for a refrigerant-transporting hose to maintain refrigerant permeation resistance in the related art. However, such a hose including a resin layer is hard and has poor flexibility. In particular, in a case where the hose is used at low pressures, the temperature of the hose itself does not increase. Thus, the hose remains hard and inflexible when used, and noise generated when the hose vibrates becomes a problem. Accordingly, a demand for a tube rubber including no resin layer and having refrigerant permeation resistance has been increasing.

Under such circumstances, for example, Patent Document 1 describes examples of a composition that is a rubber material for an inner layer (inner tube) of a refrigerant-transporting hose including no resin layer, the composition containing 100 parts by mass of butyl rubber, 40 parts by mass of carbon black (SEAST 116, available from Tokai Carbon Co., Ltd.), and 110 parts by mass of talc, and the like. Patent Document 2 discloses a rubber composition for refrigerant-transporting hoses, the rubber composition including, per 100 parts by mass of a rubber component, greater than 30 parts by mass but 180 parts by mass or less of a scale-like filler having at least one type selected from the group consisting of an amino group and an imino group in a surface. Patent Document 3 discloses a refrigerant transporting rubber hose of a layered structure at least comprising an inner layer and an outer layer, wherein an inner layer material forming the inner layer contains 60-200 parts by weight of a scale-shape filler and 10-100 parts by weight of carbon black per 100 parts by weight of a rubber material having as small a permeation coefficient against a refrigerant to be transported as possible. Patent Document 4 discloses an air conditioner hose including a tubular innermost layer for circulating a new fluorine refrigerant. The innermost layer is composed of a rubber composition which is mainly composed of the following (A) and (B) and contains the following (C): (A) butyl rubber, (B) acrylonitrile-butadiene copolymer rubber in which content of acrylonitrile is 40 wt.% or more, and (C) a scale filler. An outer periphery of the innermost layer includes a low water permeable layer. Patent Document 5 discloses a pneumatic tire having an inner liner produced by using a rubber composition comprising a rubber component and at least one type of carbon black. In the rubber composition, the content of halogenated butyl rubber is 60 to 100 mass% in 100 mass% of the rubber component, and the total content of the above carbon black is 5 to 80 mass% with respect to 100 mass% of the rubber component. At least one type of the carbon black is obtained by using a raw oil having a BMCI value of 150 or less and an aliphatic hydrocarbon ratio of 30 mass% or more. Patent Document 6 discloses a rubber hose having a structure in which an inner rubber layer, a reinforcing layer, and an outer rubber layer are laminated sequentially from the inside to the outside in the hose diameter direction and integrated. The inner rubber layer is made of a butyl rubber material and/or a butyl rubber halide material, and the outer rubber layer is made of an EPM material made of ethylene-propylene copolymer. Patent Document 7 discloses a rubber hose, which is constituted by sequentially laminating an inner rubber layer, a reinforced layer and an outer rubber layer from the inner side to the outer side along the hose radial direction so as to be integrally formed. The inner rubber layer and the outer rubber layer are formed by peroxide-vulcanizing or resin-vulcanizing (except an EPR material) a rubber composition prepared by mixing a filler having a crystal structure in a shape of a layered structure into a rubber material selected from a halogenated IIR material, a blended material of the halogenated IIR material and an IIR material, and the EPR material.

### Citation List

### Patent Literature

Patent Document 1: JP 2006-29443 A
Patent Document 2: EP 3 406 665 A1
Patent Document 3: EP 1 148 283 A2
Patent Document 4: JP 2013-228081 A
Patent Document 5: JP 2016-074811 A
Patent Document 6: JP 2003-056761 A
Patent Document 7: JP 2003-278958 A

### Summary of Invention

### Technical Problem

The present inventors prepared a rubber composition with reference to the examples in Patent Document 1 and discovered that the processability (roll processability such as sheeting capability and winding property, and extrudability) of the rubber composition does not necessarily satisfy the currently required level. The present inventors manufactured a refrigerant-transporting hose including an inner tube made from the prepared rubber composition and a reinforcing layer disposed outward of the inner tube and discovered that the hose properties (strength at break, elongation at break, 100% modulus, and refrigerant permeation resistance) of the hose do not necessarily satisfy the currently required level.

In light of the foregoing, an object of the present invention is to provide a rubber composition for a refrigerant-transporting hose having excellent processability and hose properties, and a refrigerant-transporting hose including an inner tube manufactured using the rubber composition for a refrigerant-transporting hose.

### Solution to Problem

As a result of conducting diligent research on the above problem, the present inventors have discovered that the above problem can be solved by adjusting the iodine adsorption number and the content of carbon black and completed the present invention.

That is, the present inventors discovered that the problems described above can be solved by the following features.

(1) A rubber composition for a refrigerant-transporting hose including at least an inner tube and a reinforcing layer disposed outward of the inner tube, wherein the rubber composition is used for manufacture of the inner tube, the rubber composition including:
   butyl rubber;
   a scale-like filler; and
   carbon black;
   an iodine adsorption number of the carbon black being from 65 to 150 mg/g;
   a content of the scale-like filler being 20 parts by mass or greater, per 100 parts by mass of the butyl rubber; and
   a content of the carbon black being 20 parts by mass or greater and less than 50 parts by mass, per 100 parts by mass of the butyl rubber, with the proviso that the Examples 1 to 6 of Patent Document 2 are excluded.
(2) The rubber composition for a refrigerant-transporting hose according to (1), wherein the content of the scale-like filler is from 80 to 150 parts by mass, per 100 parts by mass of the butyl rubber.
(3) The rubber composition for a refrigerant-transporting hose according to (1) or (2), wherein the scale-like filler is talc.
(4) The rubber composition for a refrigerant-transporting hose according to any one of (1) to (3), wherein a total content of the scale-like filler and the carbon black is from 50 to 60 mass% relative to a total amount of the composition.
(5) The rubber composition for a refrigerant-transporting hose according to any one of (1) to (4), wherein a coolant for the refrigerant-transporting hose is HFO-1234yf or HFC-134a.
(6) A refrigerant-transporting hose comprising at least an inner tube and a reinforcing layer disposed outward of the inner tube, the inner tube being manufactured using the rubber composition for a refrigerant-transporting hose according to any one of (1) to (5).

### Advantageous Effects of Invention

As shown in below, according to the present invention, a rubber composition for a refrigerant-transporting hose having excellent processability and hose properties, and a rubber composition for a refrigerant-transporting hose in which an inner tube is produced by using the rubber composition for a refrigerant-transporting hose can be provided.

### Brief Description of Drawings

FIG. 1 is a perspective view illustrating a cutaway of each layer of an example of the hose of the present invention.
FIG. 2 is the cross-section of the evaluation cup used for a refrigerant permeation test.

### Description of Embodiments

Hereinafter, a rubber composition for a refrigerant-transporting hose and a refrigerant-transporting hose according to an embodiment of the present invention will be described.

Note that in the present specification, numerical ranges indicated using "(from)... to..." include the former number as the lower limit value and the latter number as the upper limit value.

### Rubber Composition for Refrigerant-transporting Hose

The rubber composition for a refrigerant-transporting hose according to an embodiment of the present invention (hereinafter, also referred to as "the composition according to an embodiment of the present invention") is a rubber composition for a refrigerant-transporting hose, which is used for the manufacture of an inner tube of a refrigerant-transporting hose including at least an inner tube and a reinforcing layer disposed outward of the inner tube, the rubber composition containing butyl rubber, a scale-like filler, and carbon black.

Here, the iodine adsorption number of the carbon black is from 65 to 150 mg/g. In addition, the content of the scale-like filler is 20 parts by mass or greater, per 100 parts by mass of the butyl rubber. Furthermore, the content of the carbon black is 20 parts by mass or greater and less than 50 parts by mass, per 100 parts by mass of the butyl rubber.

The composition according to an embodiment of the present invention is thought to achieve the effects described above as a result of having such a configuration. The reason for this is not clear, but it is presumed that the use of a small amount of a carbon black having a small particle size sufficiently reinforces rubber components without negatively affecting processability.

The components included in the composition according to an embodiment of the present invention will be described in detail below.

### Butyl Rubber

The butyl rubber included in the composition according to an embodiment of the present invention is not particularly limited as long as the butyl rubber is a polymer having a repeating unit formed from isobutylene. Examples of the butyl rubber include polymers having a repeating unit formed from isobutylene and isoprene (or a halide thereof), and polymers having a repeating unit formed from isobutylene and methylstyrene (or a halide thereof). Specific examples of the butyl rubber include butyl rubber (IIR), chlorinated butyl rubber (CIIR), brominated butyl rubber (BIIR), and brominated isobutylene-p-methylstyrene copolymer rubber (BIMS). One type of butyl rubber may be used alone, or two or more types of butyl rubbers may be used in combination.

The composition according to an embodiment of the present invention may also contain a rubber component besides the butyl rubber. Examples of the rubber component include acrylonitrile-butadiene copolymer rubber (NBR), natural rubber (NR), isoprene rubber (IR), chloroprene rubber (CR), styrene-butadiene rubber (SBR), ethylene-propylene-diene rubber (EPDM), and butadiene rubber (BR).

### Scale-like Filler

The scale-like filler included in the composition of an embodiment of the present invention is not particularly limited as long as the filler has a scale-like shape. The outer periphery of the scale-like filler may be any shape.

The average diameter of the scale-like filler is preferably from 0.1 to 700 µm, or more preferably from 1 to 100 µm from the perspective of achieving a better effect of the present invention.

In an embodiment of the present invention, the average diameter of the scale-like filler is a volume average diameter determined by laser diffraction using a laser diffraction particle size analyzer.

The aspect ratio (average diameter/thickness) of the scale-like filler is preferably from 5 to 80 µm, or more preferably from 15 to 70 µm from the perspective of achieving a better effect of the present invention.

In an embodiment of the present invention, the thickness of the scale-like filler is an average value determined by observing the scale-like filler with a scanning electron microscope (SEM) with a magnification of 10000 times, measuring the thickness of a plurality of scale-like fillers randomly selected in the field observed, and calculating the average value of the measured values.

The scale-like filler is preferably at least one selected from the group consisting of talc and mica, or more preferably talc from the perspective of achieving a better effect of the present invention.

Talc and mica are not particularly limited. Examples thereof include known products.

In an embodiment of the present invention, the scale-like filler may be surface-treated, or not surface-treated.

In the composition according to an embodiment of the present invention, the content of the scale-like filler is 20 parts by mass or greater, per 100 parts by mass of the butyl rubber. In particular, the content is preferably from 80 to 150 parts by mass from the perspective of achieving a better effect of the present invention.

### Carbon Black

The carbon black included in the composition according to an embodiment of the present invention is not particularly limited as long as the carbon black has an iodine adsorption number from 65 to 150 mg/g.

The iodine adsorption number of the carbon black is preferably 100 mg/g or greater from the perspective of achieving a better effect of the present invention.

The grade of the carbon black is preferably ISAF grade or HAF grade, or more preferably ISAF grade from the perspective of achieving a better effect of the present invention.

Note that, in the present specification, the iodine adsorption number of the carbon black is measured in accordance with Japanese Industrial Standards (JIS) K 6217-1:2008.

The nitrogen adsorption specific surface area (N₂SA) of the carbon black is not particularly limited but is preferably from 50 to 150 m²/g, or particularly preferably 100 m²/g or greater from the perspective of achieving a better effect of the present invention.

Note that, in the present specification, the nitrogen adsorption specific surface area (N₂SA) of the carbon black is a value of the amount of nitrogen adsorbed to the surface of the carbon black, measured in accordance with JIS K6217-2:2001 (Part 2: Determination of specific surface area - Nitrogen adsorption methods - Single-point procedures).

The dibutyl phthalate (DBP) oil absorption number of the carbon black is not particularly limited but is preferably from 70 to 120 mL/g, or particularly preferably 110 mL/g or greater from the perspective of achieving a better effect of the present invention.

Here, "DBP oil absorption number" refers to a measure of the capability of the carbon black to absorb liquid (DBP). Larger values tend to give the carbon black a larger structure.

Note that, in an embodiment of the present invention, the DBP oil absorption number is measured in accordance with JIS K6217-4:2008 (Carbon black for rubber industry Fundamental characteristics Part 4: Determination of oil absorption number (OAN) and oil absorption number of compressed sample (COAN)).

In the composition according to an embodiment of the present invention, the content of the carbon black is 20 parts by mass or greater and less than 50 parts by mass, per 100 parts by mass of the butyl rubber. In particular, the content is preferably 30 parts by mass or less from the perspective of achieving a better effect of the present invention.

The total content of the scale-like filler and the carbon black is not particularly limited, but the total content is preferably from 50 to 60 mass% relative to the total amount of the composition from the perspective of achieving a better effect of the present invention.

### Additives

The composition of an embodiment of the present invention may further contain an additive as necessary.

Examples of an additive include resins, fillers other than the scale-like filler, carbon blacks other than the carbon black having an iodine adsorption number from 65 to 150 mg/g, softeners such as paraffin oil, stearic acid, zinc oxide, anti-aging agents, antioxidants, antistatics, flame retardants, vulcanizing agents such as sulfur and resin vulcanizing agents, vulcanization accelerators, crosslinking agents such as peroxides, and adhesion aids.

Each of the additives is not particularly limited. Examples thereof include known products.

The amount of the additive may be selected as desired.

In a case where the composition according to an embodiment of the present invention further contains a resin vulcanizing agent, examples of the resin vulcanizing agent include alkylphenol-formaldehyde resin and brominated alkylphenol-formaldehyde resin.

The content of the resin vulcanizing agent is preferably from 1 to 8 parts by mass, or more preferably from 2 to 6 parts by mass, per 100 parts by mass of the butyl rubber.

### Method of Preparing Rubber Composition for Refrigerant-transporting Hose

The method of preparing the composition according to an embodiment of the present invention is not particularly limited. An example of the method includes kneading each of the above-described components at 30 to 150°C by a close-type mixer such as a Banbury mixer or a kneader, or a kneading roll.

Conditions for vulcanization and/or crosslinking of the composition according to an embodiment of the present invention are not particularly limited. For example, the composition according to an embodiment of the present invention can be vulcanized and/or crosslinked at 140 to 160°C while applying pressure.

### Use

The composition according to an embodiment of the present invention is used for the manufacture of an inner tube of a refrigerant-transporting hose including at least the inner tube and a reinforcing layer disposed outward of the inner tube.

To achieve both flexibility and refrigerant permeation resistance of the hose, the composition according to an embodiment of the present invention is preferably used for the manufacture of the inner tube of the refrigerant-transporting hose including no resin layer in an outermost layer or an intermediate layer.

### Coolant

The coolant that passes through the refrigerant-transporting hose is not particularly limited. Examples of the coolant include a fluorine-based compound. Examples of the fluorine-based compound include fluorine-based compounds having a double bond such as 1,2,3,3,3-pentafluoropropene, 1,3,3,3-tetrafluoropropene, 2,3,3,3-tetrafluoropropene (structural formula: CF₃-CF=CH₂, HFO-1234yf), 1,2,3,3-tetrafluoropropene, and 3,3,3-trifluoropropene, and saturated hydrofluorocarbons such as HFC-134a (structural formula:CF₃-CFH₂). Among these, HFC-134a is preferable.

A single coolant can be used alone, or two or more single coolants can be used in combination.

### Refrigerant-transporting Hose

The refrigerant-transporting hose according to an embodiment of the present invention (hereinafter, also simply referred to as "the hose according to an embodiment of the present invention") is a refrigerant-transporting hose including at least an inner tube and a reinforcing layer disposed outward of the inner tube, the inner tube being manufactured using the above-described rubber composition for a refrigerant-transporting hose.

### Inner Tube

The inner tube is manufactured using the composition according to an embodiment of the present invention described above.

The inner tube may be formed from a single layer or a plurality of layers.

In a case where the inner tube includes a plurality of layers, at least the innermost layer of the inner tube is preferably manufactured using the composition according to an embodiment of the present invention. Further, an intermediate rubber layer and the like may be disposed between adjacent inner tubes.

The intermediate rubber layer and the like may also be disposed between the inner tube and the reinforcing layer adjacent to the inner tube.

### Reinforcing Layer

The reinforcing layer is not particularly limited as long as the reinforcing layer can be used for a hose.

Examples of the material used for the reinforcing layer include fiber materials such as polyester-based fiber, polyamide-based fiber, aramid fiber, vinylon fiber, rayon fiber, poly(p-phenylene)-benzobisoxazole fiber, and polyketone fiber, polyarylate fiber, and metal materials such as hard steel wires (e.g. brass-plated wire and zinc-plated wire).

A shape of the reinforcing layer is not particularly limited. Examples thereof include braid wind shape and spiral wind shape.

A single reinforcing layer can be used or a combination of two or more reinforcing layers can be used.

The reinforcing layer may be formed from a single layer or a plurality of layers.

In a case where the reinforcing layer includes a plurality of layers, an intermediate rubber layer and the like may be disposed between adjacent reinforcing layers.

### Outer Tube

The hose according to an embodiment of the present invention preferably further includes an outer tube disposed outward of the reinforcing layer.

The materials that form the outer tube are not particularly limited. For example, a rubber composition may be used for the outer tube. Specific examples of the rubber composition include styrene-butadiene rubber-based compositions, chloroprene rubber-based compositions, and ethylene-propylene diene rubber-based compositions.

The outer tube may be formed from a single layer or a plurality of layers.

In a case where the outer tube includes a plurality of layers, an intermediate rubber layer and the like may be disposed between adjacent outer tubes.

The intermediate rubber layer and the like may also be disposed between the outer tube and the reinforcing layer adjacent to the outer tube.

### Specific Examples

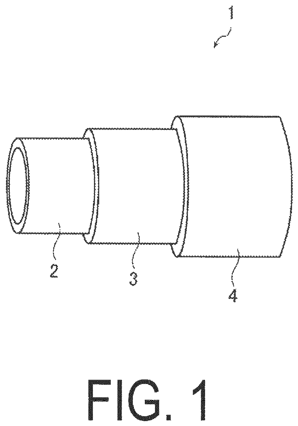

FIG. 1 is a perspective view illustrating a cutaway of each layer of an example of the hose according to an embodiment of the present invention.

In FIG. 1, a hose 1 includes an inner tube 2, a reinforcing layer 3 disposed adjacent to the outer periphery of the inner tube 2, and an outer tube 4 disposed adjacent to the outer periphery of the reinforcing layer 3.

The inner tube 2 is manufactured using the composition according to an embodiment of the present invention described above.

### Method of Producing Refrigerant-transporting Hose According to an Embodiment of the Present Invention

The method of manufacturing the hose according to an embodiment of the present invention is not particularly limited. For example, the following methods are exemplified.

The composition according to an embodiment of the present invention is first extruded from a rubber extruder for an inner tube rubber material onto a mandrel to which a mold release agent is applied in advance to form an inner tube.

A reinforcing layer is then formed on the inner tube (an adhesive layer in a case where the hose includes an adhesive layer). The method of forming the reinforcing layer is not particularly limited.

Further, the material for an outer tube is extruded on the reinforcing layer (an adhesive layer in a case where the hose includes an adhesive layer) to form an outer tube.

Thereafter, these layers are bonded via vulcanization at 130 to 190°C for 30 to 180 minutes. The hose according to an embodiment of the present invention can be manufactured in this manner. Examples of the vulcanization method include steam vulcanization, oven vulcanization (hot air vulcanization), and hot water vulcanization.

### Coolant

The coolant that passes through the hose according to an embodiment of the present invention is as described above.

### Use

The hose according to an embodiment of the present invention can be used as, for example, a hose for air conditioning systems (air conditioners) such as car air conditioning systems. The hose according to an embodiment of the present invention can also be used at low pressures. The hose according to an embodiment of the present invention preferably includes no resin layer from the perspective of reducing noise.

### Examples

The present invention is described in further detail below by using examples.

### Preparation of Rubber Composition for Refrigerant-transporting Hose

Rubber compositions for a refrigerant-transporting hose of examples and comparative examples (hereinafter, also simply referred to as "rubber composition/s") were prepared by mixing the components listed in Table 1 below at the proportion (parts by mass) listed in Table 1. Note that, in Table 1, the value in the parentheses in the "Carbon black" row represents the iodine adsorption number.

### Evaluation

The following evaluations were performed for the obtained rubber compositions.

### Processability

The obtained rubber compositions were each subjected to roll processing and evaluated for the sheeting capability (ease of creating a sheet) and winding property (ease of winding into a roll) based on the following three criteria (good, marginal, poor). The results are shown in Table 1 (sheeting capability, winding property).

Further, the obtained rubber compositions were each subjected to extrusion processing and evaluated for the extrudability (ease of extrusion processing) based on the following three criteria ("good", "marginal", "poor"). The results are shown in Table 1 (extrudability).

For the sheeting capability, winding property, and extrudability, "good" or "marginal" is preferable, and "good" is more preferable.

### Preparation of Sheet

The obtained rubber compositions were vulcanized at 153°C for 45 minutes using a press vulcanizing machine to prepare 2 mm-thick sheets.

### Tensile Test

A tensile test was conducted for the obtained sheets in accordance with JIS K 6251 at a tensile test speed of 500 mm/min, at 23°C. The tensile strength (TB) (MPa), elongation at break (EB) (%), and 100% modulus (tensile strength at 100% elongation) (M100) (MPa) were determined. The results are shown in Table 1 (TB, EB, M100). For TB, EB, and M100, larger values are preferable.

### Refrigerant Permeation Test

A refrigerant permeation test will be described below with reference to the drawings.

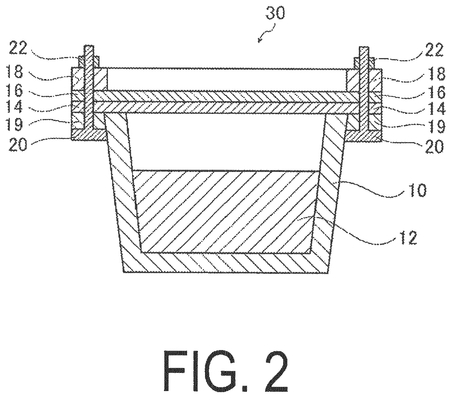

FIG. 2 is the cross-section of the evaluation cup used for the refrigerant permeation test.

As illustrated in FIG. 2, an evaluation cup 30 includes a stainless-steel cup 10 (hereinafter, referred to as "cup 10"), a sheet 14 prepared as described above, a sintered metal plate 16, fixing members 18 and 19, a bolt 20, and a nut 22. A coolant 12 is contained inside the cup 10.

The cup 10 was filled with the coolant 12 to half the capacity of the cup 10, the opening of the cup 10 was covered with the sheet 14, and the sintered metal plate 16 was placed on the sheet 14. Then, the evaluation cup 30 was prepared by fixing the end portions of the cup 10, the sheet 14, and the sintered metal plate 16 with the bolt 20 and the nut 22 via the fixing members 18, 19 to adhesion-bond together the end portions of the cup 10, the sheet 14, and the sintered metal plate 16.

HFC-134a (available from Chempurs-Mitsui Fluoroproducts Co., Ltd.) was used as the coolant.

The refrigerant permeation test was conducted by leaving the evaluation cup thus prepared at 100°C for 24 hours.

The total mass of the evaluation cup was measured before and after the test, and the amount of loss after the test was calculated.

A gas permeability coefficient was calculated by substituting the amount of loss after the test and other values into the following equation. The results are shown in Table 1 (refrigerant permeation resistance).
Gas permeation coefficient: mg·mm/24hr·cm²] = (M·t)/(T·A)

In the equation, M is the amount of loss (mg), t is the thickness of the sheet (mm), T is test time (24 hours), and A is permeation area (cm²).

A smaller gas permeation coefficient indicates excellent refrigerant permeation resistance, which is preferable.

**[Table 1-I]**

| Table 1 | | Example 1 | Example 2 | Example 3 | Example 4 | Comparative Example 1 | Example 5 |
|---|---|---|---|---|---|---|---|
| Component | Butyl rubber | 100 | 100 | 100 | 100 | 100 | 100 |
| | Carbon black 1 (119 mg/g) | 30 | 25 | 30 | 40 | 50 | |
| | Carbon black 2 (70 mg/g) | | | | | | 25 |
| | Comparative carbon black 1 (41 mg/g) | | | | | | |
| | Comparative carbon black 2 (20 mg/g) | | | | | | |
| | Scale-like filler | 100 | 130 | 130 | 130 | 130 | 130 |
| | Stearic acid | 2 | 2 | 2 | 2 | 2 | 2 |
| | Resin vulcanizing agent | 5 | 5 | 5 | 5 | 5 | 5 |
| | Zinc oxide | 5 | 5 | 5 | 5 | 5 | 5 |
| Processability | Sheeting capability | Good | Good | Good | Marginal | Poor | Good |
| | Winding property | Good | Good | Good | Marginal | Poor | Good |
| | Extrudability | Good | Good | Good | Marginal | Poor | Good |
| Hose properties | TB (MPa) | 11.1 | 10 | 10.5 | 10.8 | 11.9 | 8.9 |
| | EB (%) | 220 | 260 | 200 | 180 | 150 | 230 |
| | M100 (Mpa) | 7.4 | 7.3 | 7.7 | 9.0 | 10.5 | 6.7 |
| | Refrigerant permeation resistance (mg·mm/24hr·cm² ) | 3.8 | 4.2 | 3.9 | 3.9 | 3.7 | 4.0 |

**[Table 1-II]**

| Table 1 | Table 1 | Example 6 | Comparative Example 2 | Comparative Example 3 | Comparative Example 4 | Comparative Example 5 | Comparative Example 6 |
|---|---|---|---|---|---|---|---|
| Component | Component | 100 | 100 | 100 | 100 | 100 | 100 |
| | Carbon black 1 (119 mg/g) | | | | | | 30 |
| | Carbon black 2 (70 mg/g) | 40 | 50 | | | | |
| | Comparative carbon black 1 (41 mg/g) | | | 30 | | | |
| | Comparative carbon black 2 (20 mg/g) | | | | 35 | 50 | |
| | Scale-like filler | 130 | 130 | 130 | 130 | 130 | 16 |
| | Stearic acid | 2 | 2 | 2 | 2 | 2 | 2 |
| | Resin vulcanizing agent | 5 | 5 | 5 | 5 | 5 | 5 |
| | Zinc oxide | 5 | 5 | 5 | 5 | 5 | 5 |
| Processabil ity | Processability | Marginal | Poor | Good | Good | Poor | Good |
| | Winding property | Marginal | Poor | Good | Good | Poor | Good |
| | Extrudability | Marginal | Poor | Good | Good | Poor | Good |
| Hose properties | Hose properties | 9.4 | 10.1 | 7.9 | 7.9 | 9.2 | 11.2 |
| | EB (%) | 190 | 150 | 260 | 200 | 160 | 320 |
| | M100 (Mpa) | 8.0 | 9.5 | 6.3 | 6.7 | 8.0 | 5.1 |
| | Refrigerant permeation resistance (mg·mm/24hr·cm²) | 4.0 | 4 . 2 | 4.6 | 4.5 | 4.1 | 9.5 |

Details of the components listed in Table 1 are as follows.
- Butyl rubber: BUTYL 301 (butyl rubber, available from LANXESS)
- Carbon black 1: Show Black N220 (iodine adsorption number: 119 mg/g, nitrogen adsorption specific surface area: 111 m²/g, DBP oil absorption number: 115 mL/100 g, available from Cabot Japan K.K.)
- Carbon black 2: Niteron #200 IN (iodine adsorption number: 70 mg/g, nitrogen adsorption specific surface area: 71 m²/g, DBP oil absorption number: 101 mL/100 g, available from NSCC Carbon Co., Ltd.)
- Comparative carbon black 1: Niteron #10 IN (iodine adsorption number: 41 mg/g, nitrogen adsorption specific surface area: 41 m²/g, DBP oil absorption number: 121 mL/100 g, available from NSCC Carbon Co., Ltd.)
- Comparative carbon black 2: Asahi #50 (iodine adsorption number: 20 mg/g, DBP oil absorption number: 64 mL/100 g, available from Asahi Carbon Co., Ltd.)
- Scale-like filler: MISTRON VAPOR (talc, available from Imerys Specialities Japan Co., Ltd.)
- Stearic acid: Industrial stearic acid N (available from Chiba Fatty Acid Co., Ltd.)
- Resin vulcanizing agent: Tackirol 250-I (Brominated alkylphenol-formaldehyde resin, available from Taoka Chemical Co., Ltd.)
- Zinc oxide: Zinc Oxide III (available from Seido Chemical Industry Co., Ltd.)

As can be seen from Table 1, Examples 1 to 6 of the present invention all exhibited excellent processability and hose properties. In particular, Examples 1 to 3 and 5, in which the content of the carbon black was 30 parts by mass or less, per 100 parts by mass of the butyl rubber, exhibited even better processability.

From the comparison between Examples 2 and 5, Example 2, in which the iodine adsorption number of the carbon black was 100 mg/g or greater, exhibited greater TB, EB, and M100.

Meanwhile, for Comparative Examples 1 and 2, in which the content of the carbon black was greater than 50 parts by mass, per 100 parts by mass of the butyl rubber, the processability and EB were insufficient. For Comparative Examples 3 and 4, which contained the carbon black with an iodine adsorption number of less than 65 mg/g instead of the carbon black with an iodine adsorption number from 65 to 150 mg/g, TB and refrigerant permeation resistance were insufficient. Further, for Comparative Example 6, in which the content of the scale-like filler was less than 20 parts by mass, per 100 parts by mass of the butyl rubber, M100 and refrigerant permeation resistance were insufficient.

### Reference Signs List

- 1: Hose
- 2: Inner tube
- 3: Reinforcing layer
- 4: Outer tube
- 10: Cup
- 12: Coolant
- 14: Sheet
- 16: Sintered metal plate
- 18, 19: Fixing member
- 20: Bolt
- 22: Nut
- 30: Evaluation cup

## Claims

1. A rubber composition for a refrigerant-transporting hose comprising at least an inner tube and a reinforcing layer disposed outward of the inner tube, wherein the rubber composition is used for manufacture of the inner tube, the rubber composition comprising:
butyl rubber;
a scale-like filler; and
carbon black;
an iodine adsorption number of the carbon black being from 65 to 150 mg/g;
a content of the scale-like filler being 20 parts by mass or greater, per 100 parts by mass of the butyl rubber; and
a content of the carbon black being 20 parts by mass or greater and less than 50 parts by mass, per 100 parts by mass of the butyl rubber, with the proviso that Examples 1 to 6 of EP3406665 are excluded.

2. The rubber composition for a refrigerant-transporting hose according to claim 1, wherein the content of the scale-like filler is from 80 to 150 parts by mass, per 100 parts by mass of the butyl rubber.

3. The rubber composition for a refrigerant-transporting hose according to claim 1 or 2, wherein the scale-like filler is talc.

4. The rubber composition for a refrigerant-transporting hose according to any one of claims 1 to 3, wherein a total content of the scale-like filler and the carbon black is from 50 to 60 mass% relative to a total amount of the composition.

5. The rubber composition for a refrigerant-transporting hose according to any one of claims 1 to 4, wherein a coolant for the refrigerant-transporting hose is HFO-1234yf or HFC-134a.

6. A refrigerant-transporting hose comprising at least an inner tube and a reinforcing layer disposed outward of the inner tube, the inner tube being manufactured using the rubber composition for a refrigerant-transporting hose described in any one of claims 1 to 5.

## Patentansprüche

1. Eine Kautschukzusammensetzung für einen Kältemitteltransportschlauch aufweisend zumindest einen Innenschlauch und eine Verstärkungslage die außerhalb des Innenschlauchs vorgesehen ist, wobei die Kautschukzusammensetzung zum Herstellen des Innenschlauchs verwendet wird, die Kautschukzusammensetzung weist auf:
Butylkautschuk,
einen skalenartigen Füller, und
Karbonschwarz,
eine lodadsorptionsanzahl des Karbonschwarz beträgt zwischen 65 bis 150 mg/g,
einen Gehalt von dem skalenartigen Füller beträgt 20 Massenanteile oder mehr, je 100 Teilen der Masse des Butylkautschuks, und
ein Gehalt des Karbonschwarz beträgt 20 Massenanteile oder mehr und weniger als 50 Massenanteile, je 100 Massenanteilen von dem Butylkautschuk, mit dem Vorbehalt, dass die Beispiele 1 bis 6 von der EP3406665 davon ausgenommen sind.

2. Die Kautschukzusammensetzung für einen Kältemitteltransportschlauch gemäß Anspruch 1, wobei der Gehalt von dem skalenartigen Füller 80 bis 150 Massenanteile ist, je 100 Massenanteilen des Butylkautschuks.

3. Die Kautschukzusammensetzung für einen Kältemitteltransportschlauch gemäß Anspruch 1 oder 2, wobei der skalenartige Füller Talk ist.

4. Die Kautschukzusammensetzung für einen Kältemitteltransportschlauch gemäß einem der Ansprüche 1 bis 3, wobei ein Gesamtgehalt von dem skalenartigen Füller und des Karbonschwarz von 50 bis 60 Massen-% relativ zu einem Gesamtgehalt der Zusammensetzung beträgt.

5. Die Kautschukzusammensetzung für einen Kältemitteltransportschlauch gemäß einem der Ansprüche 1 bis 4, wobei ein Kältemittel für den Kältemitteltransportschlauch HFO-1234yf oder HFC-134a ist.

6. Ein Kältemitteltransportschlauch aufweisend zumindest einen Innenschlauch und eine Verstärkungslage die außerhalb des Innenschlauchs vorgesehen ist, der Innenschlauch wird hergestellt unter Verwendung der Kautschukzusammensetzung für einen Kältemitteltransportschlauch wie in einem der Ansprüche 1 bis 5 beschrieben.

## Revendications

1. Composition de caoutchouc pour un tuyau de transport de fluide frigorigène comprenant au moins un tube interne et une couche de renfort disposée à l'extérieur du tube interne, dans laquelle la composition de caoutchouc est utilisée pour la fabrication du tube interne, la composition de caoutchouc comprenant :
du caoutchouc butyle ;
une charge de type tartre ; et
du noir de carbone ;
l'indice d'iode du noir de carbone étant compris entre 65 et 150 mg/g ;
la teneur en charge de type tartre étant supérieure ou égale à 20 parties en masse pour 100 parties en masse du caoutchouc butyle ; et
la teneur en noir de carbone étant supérieure ou égale à 20 parties en masse et inférieure à 50 parties en masse pour 100 parties en masse du caoutchouc butyle, à condition d'exclure les exemples 1 à 6 du document EP3406665.

2. Composition de caoutchouc pour un tuyau de transport de fluide frigorigène selon la revendication 1, dans laquelle la teneur en charge de type tartre est comprise entre 80 et 150 parties en masse pour 100 parties en masse de caoutchouc butyle.

3. Composition de caoutchouc pour un tuyau de transport de fluide frigorigène selon la revendication 1 ou 2, dans laquelle la charge de type tartre est du talc.

4. Composition de caoutchouc pour un tuyau de transport de fluide frigorigène selon l'une quelconque des revendications 1 à 3, dans laquelle la teneur totale en charge de type tartre et en noir de carbone est de 50 à 60 % en masse par rapport à la quantité totale de la composition.

5. Composition de caoutchouc pour un tuyau de transport de fluide frigorigène selon l'une quelconque des revendications 1 à 4, dans laquelle le liquide de refroidissement pour le tuyau de transport de fluide frigorigène est le HFO-1234yf ou le HFC-134a.

6. Tuyau de transport de fluide frigorigène comprenant au moins un tube interne et une couche de renfort disposée à l'extérieur du tube interne, le tube interne étant fabriqué en utilisant la composition de caoutchouc pour un tuyau de transport de fluide frigorigène décrite dans l'une quelconque des revendications 1 à 5.
